# FASCICULE DE BREVET EUROPEEN

(11) **EP 1 442 941 B1**
(45) Date de publication et mention de la délivrance du brevet: **28.11.2007**
(21) Numéro de dépôt: 04360004.8
(22) Date de dépôt: 21.01.2004
(51) Int. Cl.: B60R 13/02, F16B 5/07, F16B 5/12, B60R 13/04

(54) **Clip de fixation intégré amélioré, notamment pour baguettes de caisse et autres accessoires d'automobiles**
Verbesserte integriertes Montageklammer, insbesondere für Karosserizierleisten und andere Autozubehören
Improved integrated mounting clip particularly for covering strips and other car accessories

(30) Priorité: 22.01.2003 FR 0300660
(43) Date de publication de la demande: 04.08.2004
(73) Titulaire: REHAU S.A., 57340 Morhange (FR)
(72) Inventeur: Igle, Armand, 57340 Hombourg-Haut (FR)
(74) Mandataire: Metz, Paul

(56) Documents cités:
- EP-A- 1 050 436
- EP-A- 1 197 393
- DE-C- 19 721 757
- FR-A- 2 742 711
- FR-A- 2 784 613

## Description

La présente invention concerne un clip de fixation intégré amélioré, destiné principalement aux baguettes, moulures, enjoliveurs de ceinture de caisse ou de bas de caisse ou à tout autre élément à rapporter sur la carrosserie ou toutes les parties d'un véhicule routier notamment du type automobile.

L'invention se rapporte également à une baguette de protection ou d'enjolivement pour carrosserie de véhicules routiers notamment du type automobile comportant de tels clips intégrés améliorés.

Les baguettes de protection ou d'enjolivement de ce type sont des pièces en matière plastique réalisées par moulage par injection, conçues pour être montées fixes sur la carrosserie d'un véhicule.

De manière connue, la carrosserie présente une série d'ouvertures en forme de trou de serrure, c'est-à-dire comportant une zone large prolongée par une zone plus étroite, destinées à recevoir et à coopérer avec des éléments de fixation de la baguette situés en vis-à-vis.

De façon classique, les baguettes comportent sur leur face arrière un espace creux longitudinal, continu et ouvert en direction de la carrosserie du véhicule, dans lequel sont logés ces éléments de fixation.

Dans l'art antérieur, on connaît des éléments de fixation constitués de plusieurs parties fabriquées séparément, devant être assemblées préalablement ou lors du montage de la baguette sur la carrosserie. De tels éléments de fixation ont par exemple été décrits dans les demandes antérieures au nom du déposant FR 2.726.519 et FR 2.748.300.

Ces dispositifs nécessitent une étape de moulage pour chacune de leurs parties, suivie d'une étape d'assemblage des différents éléments sur la baguette. La fabrication de la baguette est ainsi compliquée et rallongée.

On connaît également le clip rapporté décrit dans le brevet allemand DE 19721757 au nom de la société DAIMLER-BENZ. Ce clip comprend une tête de clip en acier, découpée et emboutie de manière à former sur chacun de ses côtés un bras élastique en forme d'arc à courbure dirigée vers le bas. La tête de clip est ensuite visée sur une vis d'axe fixée à la face arrière de la baguette et servant d'âme au clip.

Un autre exemple de clips intégrés de fixation est donné dans la demande de brevet FR 2.742.711 au nom de REHAU AG.

Pour remédier à ces inconvénients, on a alors développé des éléments de fixation, appelés clips intégrés de fixation, formés d'une seule pièce et réalisés d'un seul tenant avec la baguette au cours d'une unique étape de moulage. A leur extrémité libre, ces éléments de fixation sont conçus comme des têtes d'encliquetage destinées à se mettre en prise dans une ouverture de la carrosserie qui leur est associée, ces têtes d'encliquetage étant reliées au reste du clip par un élément central plus étroit servant d'axe au clip de fixation.

Au cours du montage, on plaque la baguette contre la carrosserie en faisant passer la tête d'encliquetage des clips de fixation à travers la zone large des ouvertures. Puis, on effectue un déplacement axial de la baguette, de manière que l'axe de chacun des clips de fixation pénètre dans la zone étroite des ouvertures.

Simultanément, la face inférieure des têtes d'encliquetage vient en prise sous les bords de la carrosserie entourant la zone étroite des ouvertures, assurant ainsi une solidarisation par encliquetage de la baguette à la carrosserie.

De tels éléments intégrés de fixation ont par exemple été représentés et décrits dans le brevet REHAU FR 2.784.613. Ils comportent un caisson servant de base de rattachement à la face intérieure de la baguette, un plan de glissement et de contact en forme de plateau et une aile de blocage sensiblement rectangulaire et légèrement inclinée. Cette aile de blocage, remplissant la fonction de tête d'encliquetage, est reliée au plan de glissement par une âme centrale servant d'axe au clip de fixation.

Malgré l'apparente simplicité de cette méthode de montage, des problèmes sont souvent rencontrés avec ce type de clips intégrés devant coopérer avec des ouvertures de carrosserie en forme de trou de serrure.

Les clips de fixation sont répartis selon un espacement préalablement déterminé correspondant à la disposition des ouvertures dans la carrosserie.

Ils sont également dimensionnés en fonction de la taille de ces ouvertures, la tête de clip devant être d'une taille inférieure à la partie large de l'ouverture pour pouvoir y être insérée mais suffisante pour assurer un bon maintien de la baguette contre la carrosserie. De ce fait, un jeu relativement faible est prévu entre la tête de clip et les bords de la partie large de l'ouverture.

Cependant, lors du moulage, les clips de fixation sont réalisés avec une certaine tolérance de fabrication, inhérente à tout processus industriel, tant au niveau de leur taille que de leur positionnement. De la même façon, les ouvertures sont ménagées dans la carrosserie avec une certaine tolérance quant à leurs dimensions et à leur emplacement.

Or parfois, il se trouve que la somme de ces tolérances est supérieure au jeu prévu pour l'insertion de la tête de clip. Il est alors impossible de réaliser la première étape du montage de la baguette, les têtes de clip ne pouvant entrer toutes simultanément dans la partie large des ouvertures correspondantes.

La difficulté est amplifiée lorsque la baguette présente une grande longueur, par exemple dans le cas de véhicules à trois portes, et/ou lorsque le nombre de clips à positionner est important, d'autant plus que l'insertion des têtes d'encliquetage dans les parties larges des ouvertures de carrosserie puis la translation des clips dans les zones étroites de celles-ci s'effectuent en aveugle, la baguette opaque masquant la zone de montage.

De ce fait, un positionnement précis de la baguette est nécessaire. Le monteur doit parfois insérer certains clips, puis amorcer le mouvement de translation avant de pouvoir insérer les autres clips. Comme il travaille en aveugle, il est souvent contraint de faire plusieurs tentatives avant de réussir à placer correctement la baguette et à la faire coulisser, ce qui est incompatible avec les cadences de montage extrêmement rapides recherchées.

Ces difficultés sont la cause de nombreux problèmes ou défauts de fixation de la baguette, ainsi que d'une augmentation non négligeable de la complexité et du coût de sa pose. Par la suite, certaines baguettes, non complètement ou correctement fixées, se décrochent lors du roulage et finissent par tomber.

Le but de l'invention est de fournir un nouveau type de clips intégrés de fixation qui facilite le montage de la baguette.

Pour résoudre ce problème technique, le clip intégré selon l'invention comprend une tête d'encliquetage qui présente un contour périmétrique à extrémité avant à pointe, formé de deux bords convergeant vers l'avant et divergeant ou s'évasant vers une extrémité arrière ouverte ou fermée.

De préférence, l'extrémité avant à pointe du contour périmétrique de la tête de clip est arrondie en forme d'ogive.

Selon une variante préférentielle, la tête de clip présente un corps de forme générale en « U couché », comportant deux branches latérales réunies à l'avant par une portion centrale incurvée.

Cette tête d'encliquetage est reliée au reste du clip par une âme centrale plus étroite servant d'axe au clip de fixation.

Cette conception particulièrement avantageuse de la tête de clip permet un gain de centrage non négligeable par rapport à la forme rectangulaire de la tête de clip selon l'art antérieur. Comme on peut le voir sur les schémas comparatifs annexés, la gamme de positionnements de la tête de clip convenables pour pouvoir être insérée dans la partie large de l'ouverture est plus importante. En effet, la tête de clip peut traverser l'ouverture alors que la partie avant en pointe, notamment la partie centrale incurvée, de la tête de clip est déjà partiellement engagée dans la zone étroite de l'ouverture.

Afin d'améliorer encore le gain de centrage, le plan de la tête de clip est de préférence incliné, l'extrémité avant à pointe étant surélevée par rapport à l'extrémité arrière.

L'extrémité avant de la tête de clip peut également être dégagée et s'étendre en porte-à-faux à partir de l'âme centrale. La face inférieure de la tête de clip peut en outre avantageusement comporter une ou plusieurs rampe(s) progressive(s) d'engagement.

Pour faciliter encore l'insertion de la tête de clip dans la partie large des ouvertures, on peut arrondir les bords périphériques de la tête de clip, en prévoyant notamment un chant extérieur bombé ou arrondi et/ou au moins une branche latérale à extrémité arrière réalisée en quart de sphère.

Selon une variante préférentielle, le clip de fixation selon l'invention comporte en outre une base et une sellette d'étanchéité.

Comme pour la tête de clip, l'extrémité avant de la sellette d'étanchéité est de préférence dégagée et s'étend en porte-à-faux vers l'avant. La flexibilité de la sellette d'étanchéité est ainsi améliorée, ce qui facilite son démoulage et réduit les efforts nécessaires pour réaliser la deuxième étape du montage de la baguette.

Lors de cette deuxième étape de montage, consistant à déplacer latéralement la baguette de manière à faire passer l'axe des clips de la partie large à la partie étroite des ouvertures, le monteur qui travaille en aveugle est souvent confronté à un autre problème.

Le poids de la baguette a tendance à entraîner celle-ci vers le bas, provoquant alors un décalage vers le bas de l'axe des clips de fixation.

Or, pour réaliser sans difficulté la deuxième étape du montage, l'axe de chacun des clips doit être situé précisément en face de la partie rétrécie de l'ouverture. En cas de mauvais positionnement, l'axe du clip vient buter contre la paroi transversale de l'ouverture et empêche le déplacement.

Selon l'invention, une patte sécable de positionnement peut être prévue, de préférence sous la tête de clip, dont la fonction est de s'opposer à la descente du clip de fixation traversant la partie large de l'ouverture, en buttant contre la paroi inférieure de cette ouverture.

Cette patte permet d'assurer un juste positionnement de l'axe des clips et évite les inconvénients précédemment cités. Le clip étant idéalement pré-positionné, l'étape de translation ne présente plus aucune difficulté.

Grâce à la conception particulièrement inventive du clip selon l'invention, les deux étapes du montage de la baguette sont grandement simplifiées, ce qui diminue le coût de pose et améliore sa fiabilité.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de la face intérieure d'un tronçon de baguette comportant plusieurs clips intégrés selon l'invention ;
- la figure 2 est une vue en perspective d'un clip intégré selon l'invention vu de côté ;
- la figure 3 est une vue en perspective d'un clip intégré selon l'invention vu de l'avant ;
- la figure 4 est une vue en perspective d'un clip intégré selon l'invention vu de l'arrière ;
- la figure 5 est une vue de profil d'un clip intégré selon l'invention, dans laquelle on a schématiquement représenté le retrait de matière par rapport à l'art antérieur améliorant la flexibilité de la sellette d'appui ;
- la figure 6 est une vue de dessus schématique d'un clip selon l'invention monté sur la carrosserie dans la position initiale du montage de la baguette sur la carrosserie ;
- la figure 7 est une vue schématique en coupe longitudinale, selon la ligne de coupe VII-VII de la figure 6, d'un clip selon l'invention monté sur la carrosserie dans la position initiale de montage représentée sur la figure 6 ;
- la figure 8 est une vue de dessus schématique du clip selon l'invention monté sur la carrosserie dans la position de blocage finale du montage de la baguette sur la carrosserie ;
- la figure 9 est une vue schématique en coupe longitudinale, selon la ligne de coupe IX-IX de la figure 8, d'un clip selon l'invention monté sur la carrosserie dans la position de blocage finale représentée sur la figure 8 ;
- les figures 10 A, B, C et D sont des vues schématiques illustrant le gain de centrage obtenu avec une tête de clip selon l'invention (figures A et B) par rapport à une tête de clip selon l'art antérieur (figures C et D) ;
- les figures 11 A à E sont des vues schématiques représentant le positionnement d'une tête de clip selon l'invention dans une ouverture de carrosserie en trou de serrure, lors des différentes phases de montage de la baguette, selon qu'une patte sécable de positionnement a été ou non prévue.

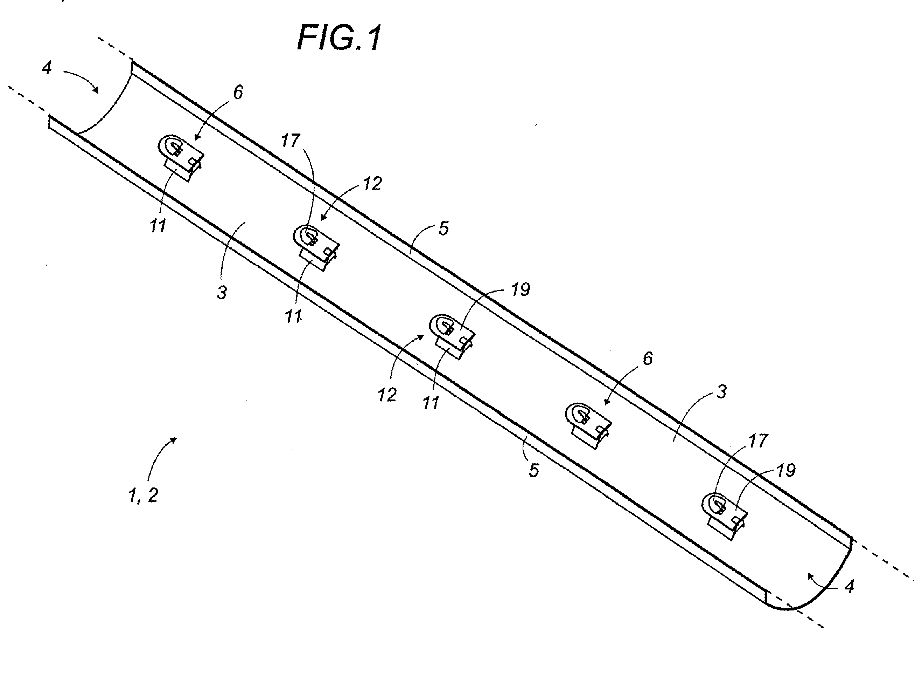

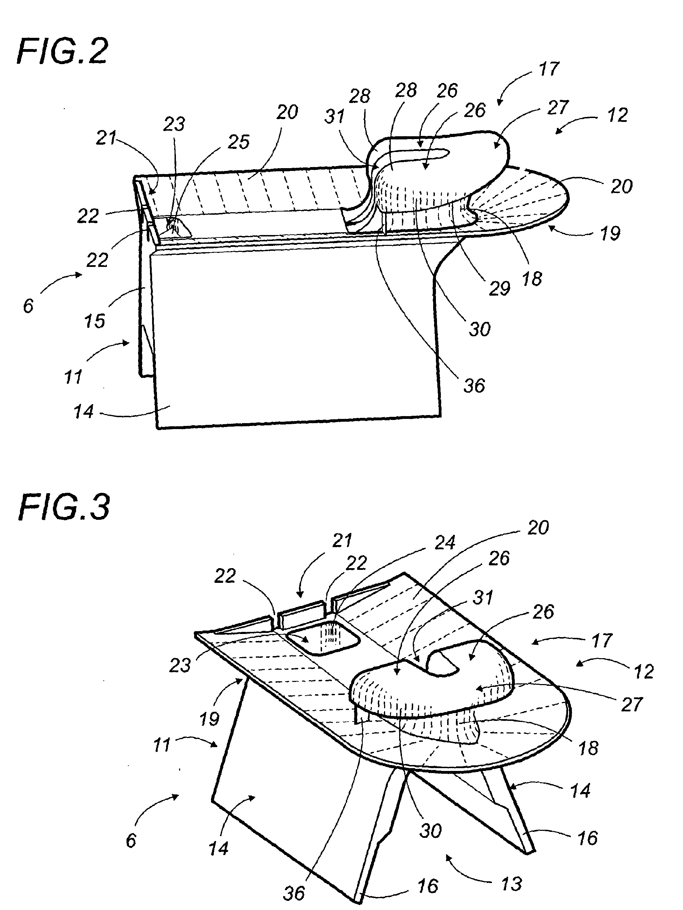

Le dispositif de fixation selon la présente invention va maintenant être décrit de façon détaillée en référence aux figures 1 à 11. Les éléments équivalents représentés sur les différentes figures porteront les mêmes références numériques.

Sur ces différentes figures, on a représenté un clip de fixation et une baguette constituant des modes de réalisation préférentiels de l'invention. En effet, les clips de fixation représentés sur les figures et décrits dans la suite de la demande présentent tous une tête de clip à corps de forme générale en « U couché ». Il doit cependant être bien compris que ces figures ainsi que la description détaillée de celles-ci ne sont données qu'à titre d'exemple et ne sont en rien limitatives de la portée et de l'application de l'invention, cette dernière pouvant s'étendre à tout le véhicule.

Par convention dans cette description, on désignera par faces avant et arrière du clip les faces de celui-ci dirigées respectivement vers la partie étroite et vers la partie large de l'ouverture en forme de trou de serrure, lorsque le clip est monté sur la carrosserie. Les notions de haut et de bas seront définies en fonction de l'orientation du clip tel que représenté sur les figures.

Sur la figure 1, on a représenté un accessoire à solidariser sur la paroi d'un véhicule, notamment ici un tronçon 1 d'une pièce allongée. Il s'agit par exemple d'un tronçon de baguette, bande, moulure décorative ou protectrice de ceinture de caisse, de bas de caisse ou analogue.

L'invention n'est cependant pas limitée à cette application préférentielle et pourrait être appliquées à tout autre pièce, élément ou accessoire approprié d'un véhicule routier, notamment automobile. A titre d'exemple, on peut citer les protections inférieures de portières, les badges, logos ou emblèmes, les pièces d'habillage intérieur, ou même les éléments de tableau de bord.

Selon sa nature, l'accessoire peut être rapporté sur et solidarisé à la face extérieure ou intérieure de la carrosserie ou de toute autre paroi du véhicule. Par carrosserie, on entend la structure périphérique du véhicule dans son ensemble.

Ce tronçon 1 de baguette 2 se présente sous la forme d'une pièce allongée, à corps de section transversale bombée de manière à définir sur sa face intérieure 3 un espace creux 4 longitudinal, continu et ouvert, destiné à être placé en direction de la carrosserie du véhicule.

De manière classique, l'espace creux 4 est bordé latéralement de deux rebords 5 longitudinaux, sensiblement verticaux ou obliques selon les exigences de style.

La baguette 2 comporte sur sa face intérieure 3 des clips de fixation 6 dits intégrés, c'est-à-dire réalisés d'une seule pièce et d'un seul tenant avec la baguette au cours d'une unique étape de moulage.

Ces clips de fixation 6 permettent notamment le montage et la fixation de la baguette 2 sur la carrosserie d'un véhicule. Pour cela, ils sont conçus pour coopérer avec une série d'ouvertures 7 prévues dans la tôle 8 de la carrosserie notamment au niveau des portes ou des bas de caisse.

De façon connue, la forme des ouvertures 7 de la carrosserie est du type en « trou de serrure ». Elles présentent ainsi une zone large 9 suivie d'une zone plus étroite 10.

Les clips de fixation 6 existent en plusieurs endroits sur toute la longueur du corps de la baguette 2 de manière à garantir un maintien uniforme et solide de la pièce moulée contre la tôle 8 de carrosserie. Elles sont disposées selon un espacement prédéterminé correspondant à celui des ouvertures 7 avec lesquelles elles se retrouvent en vis-à-vis lorsque la baguette est positionnée contre la carrosserie.

Sur la figure 1, on a représenté les clips de fixation 6 positionnés de manière équidistante le long de la ligne médiane de la baguette. Néanmoins, suivant les modèles de baguette et les possibilités d'ouvertures dans la carrosserie, ces clips peuvent être disposés différemment.

Ainsi par exemple, ils peuvent être alignés ou non, placés sur une ou plusieurs rangées s'étendant le long de la ligne médiane ou décalée(s) par rapport à celle-ci, avec un espacement quelconque entre les différents clips. Les clips de fixation 6, en nombre quelconque, peuvent même se trouver dans des plans différents si par exemple la baguette est destinée à recouvrir une jonction entre deux plans jointifs de carrosserie.

Chaque clip de fixation 6 comporte préférentiellement une base 11 de la face supérieure de laquelle fait saillie une structure d'accrochage ou de clipsage 12 conçue pour s'engager dans l'ouverture de carrosserie 7 correspondante.

Dans le mode de réalisation représenté, la base 11 est une structure en caisson, à base sensiblement rectangulaire, qui délimite un espace creux 13 ouvert sur l'une de ses faces, de préférence à l'avant, pour permettre le démoulage.

La base 11 est reliée à la face intérieure de la baguette par deux parois latérales 14 qui s'élèvent de manière inclinée et convergente assurant ainsi une parfaite stabilité au dièdre ainsi formé. Pour améliorer sa rigidité, la base 11 peut également être fermée par une paroi arrière 15.

Pour limiter les problèmes de retassure et minimiser les défauts d'aspect sur la face externe visible de la baguette, les surfaces de contact entre le clip de fixation 6 et la peau de la baguette doivent être réduites au minimum. De ce fait, une base 11 en caisson creux est préférée à une structure pleine, sa stabilité et sa résistance au pliage étant données par la disposition de ses parois.

Pour la même raison, la paroi arrière 15 ne se poursuit de préférence pas jusqu'à la face intérieure 3 de la baguette. De même, les parois latérales 14 peuvent comporter une partie inférieure 16 d'épaisseur plus réduite également appelée striction.

La base 11 constitue un pont de matière de hauteur suffisante pour maintenir la structure d'accrochage 12 à distance de la face intérieure 3 de la baguette d'une valeur rattrapant la flèche de concavité de la baguette 2 en vue de permettre l'accrochage sur la tôle de la carrosserie.

Sur les différentes figures, les parois latérales 14 ont été représentées comme étant symétriques. On peut cependant imaginer qu'elles soient par exemple de hauteur différente, ce qui permet d'incliner à volonté la structure d'accrochage 12.

Cette structure d'accrochage 12 comporte une tête de clip 17 réunie à la base 11 par une âme centrale 18 qui sert ainsi d'axe au clip de fixation.

De façon préférentielle, le clip de fixation 6 peut comporter en outre une sellette d'étanchéité 19 destinée à obturer l'ouverture 7 de carrosserie lorsque la baguette est en place, afin de limiter l'entrée d'eau et de saletés à l'intérieur de la carrosserie et d'atténuer la transmission du bruit de roulage.

Selon une variante préférentielle, la paroi supérieure de la base 11 peut être conçue de manière à constituer directement la sellette d'étanchéité 19 du clip de fixation.

Elle peut ainsi se présenter sous la forme d'un plateau arrondi à l'avant, comportant un bord périphérique 20 relevé de façon inclinée vers le haut en direction de la carrosserie sous l'effet d'une précontrainte.

De préférence, la sellette d'étanchéité 19 comporte également un rebord 21, sensiblement vertical et perpendiculaire au plan de la sellette, qui s'élève en direction de la carrosserie.

Sur le mode de réalisation représenté, le bord périphérique 20 s'élève progressivement à l'avant et sur les côtés. Sur la face arrière, le bord de la sellette d'étanchéité 19 est fermé par le rebord 21 qui s'étend de préférence dans le prolongement de la paroi arrière 15 de la base 11.

De ce fait, lorsque le clip de fixation 6 est en prise avec l'ouverture de la carrosserie 7 correspondante, la sellette d'étanchéité constitue une surface de glissement et de contact qui vient par son bord incliné 20 et son rebord arrière 21 en contact avec le bord marginal de carrosserie 8 entourant l'ouverture 7. Une protection quasi-étanche de l'ouverture 7 est ainsi réalisée, s'opposant à l'entrée d'eau, de poussières et de saletés à l'intérieur de la carrosserie.

Des fentes 22 sont prévues sur le rebord arrière 21, de manière à conférer aux bords latéraux précontraints de la sellette d'étanchéité 17 une certaine flexibilité leur permettant de s'adapter à la forme de la carrosserie pour assurer le contact étanche recherché. En améliorant la flexibilité de la sellette, ces fentes 22 permettent de réaliser le mouvement de translation de la baguette sans que l'effort de montage soit trop important.

Cependant, afin de ne pas accroître l'effort de montage de la baguette par le frottement des sellettes d'étanchéité, il peut également être prévu que le bord périphérique incliné 20 et le rebord 21 de la sellette d'étanchéité 19 ne soient pas en contact avec la carrosserie, mais soient simplement dirigés vers celle-ci lorsque la baguette est montée en position finale. Une étanchéité totale n'est alors plus garantie. Toutefois, les entrées d'eau, de poussières et de saletés sont fortement réduites par la présence de la sellette d'étanchéité 19 et par les rebords 5 de la baguette en appui contre la carrosserie.

De manière optionnelle, le clip de fixation 6 peut comporter au niveau de sa sellette d'étanchéité 19 une cavité 23, située ici par exemple à l'arrière de la tête de clip 17.

Lors des opérations de moulage et de démoulage, cette cavité est occupée par l'extrémité d'une tige de maintien qui sert à maintenir la baguette 2 pendant le démoulage et notamment lors de l'extraction des cales moulantes hors des poches de moulage.

De préférence, la cavité 23 présente une ouverture 24 dirigée vers le haut, par exemple de forme sensiblement carrée. Elle peut également comporter une paroi de fond inclinée 25.

Selon une caractéristique essentielle de l'invention, la tête de clip 17 présente une conformation particulièrement avantageuse et inventive qui lui permet de réaliser l'effet de centrage recherché.

La tête de clip 17 présente en effet un contour périmétrique à extrémité avant 27 à pointe, formé de deux bords 26 convergeant vers l'avant et divergeant ou s'évasant vers l'extrémité arrière de la tête de clip, cette extrémité arrière pouvant être ouverte ou fermée.

Préférentiellement, l'extrémité avant 27 à pointe de la tête de clip 17 est arrondie en forme d'ogive.

Sur la variante préférentielle représentée, la tête de clip 17 présente un corps de forme générale dite en « U couché ». Ses bords convergents 26 forment ainsi deux branches latérales réunies à l'avant par une portion centrale incurvée au niveau de son extrémité avant 27.

Le plan de la tête de clip est de préférence incliné, l'extrémité avant à pointe, par exemple la portion centrale avant 27, étant surélevée par rapport à son extrémité arrière, dans ce cas l'extrémité arrière 28 des branches latérales 26.

Avantageusement, la face inférieure de la tête de clip comporte une ou plusieurs rampe(s) progressive(s) d'engagement 29, formée(s) par exemple d'un plan incliné ou d'un arrondi. De telles rampes d'engagement sont par exemple situées au niveau de la face inférieure des branches latérales 26 qui s'élève progressivement de l'arrière vers l'avant.

Pour faciliter encore l'insertion de la tête de clip 17 dans la partie large 9 des ouvertures 7, on peut prévoir d'arrondir les bords périphériques de la tête de clip.

Ainsi, la tête de clip 17 peut présenter un chant extérieur 30 bombé ou arrondi, par exemple sur le mode de réalisation préférentiel représenté au niveau de ses branches latérales 26 et/ou de sa portion centrale 27. De même, l'extrémité arrière 28 des branches latérales 26 est préférentiellement réalisée en quart de sphère.

Par ailleurs, la tête de clip 17 comporte un évidement 31, ouvert ou fermé, situé de préférence sur sa face arrière et pouvant se prolonger le long de l'âme centrale 18. Cet évidement permet un refroidissement plus rapide de la tête de clip 17 et évite que des déformations de la tête de clip, qui constitue une importante masse chaude, ne se produisent lors de cette phase de refroidissement. La précision nécessaire peut ainsi être obtenue à l'injection garantissant la géométrie souhaitée pour le contour périphérique.

Préférentiellement, l'extrémité avant de la tête de clip 17 peut être dégagée et s'étendre en porte-à-faux vers l'avant à partir de l'âme centrale 18.

L'extrémité avant de la sellette d'étanchéité 19 peut également être dégagée et s'étendre en porte-à-faux vers l'avant à partir de la base 11 du clip de fixation 6. La flexibilité de la sellette d'étanchéité 19 est ainsi améliorée, ce qui facilite son démoulage et réduit les efforts nécessaires pour réaliser la deuxième étape du montage de la baguette.

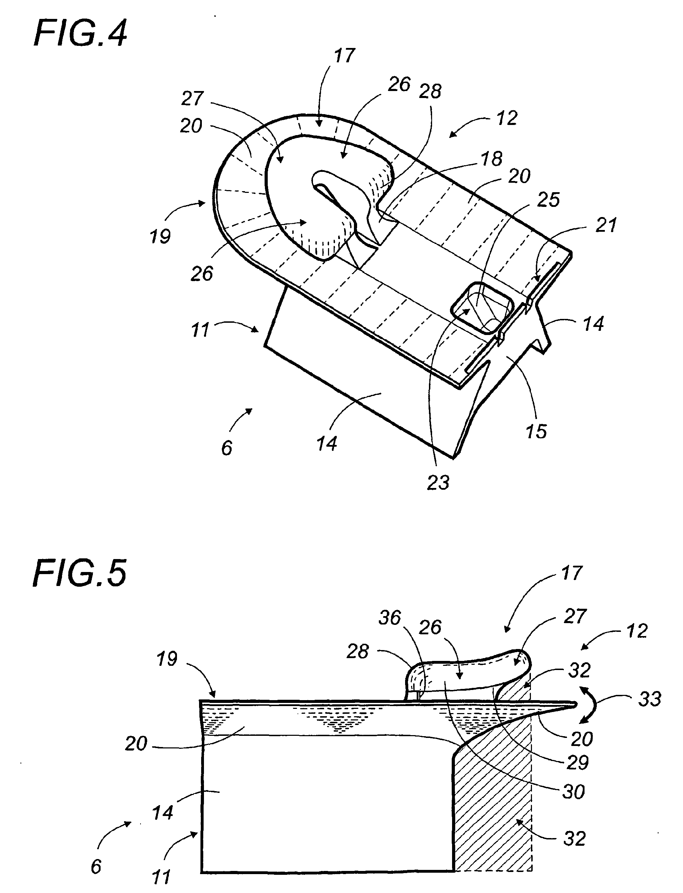

Ces dégagements des parties avant de la tête de clip 17 et de la sellette 19 ont été clairement mis en évidence sur la figure 5, dans laquelle on a schématiquement représenté le retrait de matière par rapport à l'art antérieur par des surfaces hachurées 32. Le gain de flexibilité de l'avant de la sellette d'étanchéité 19 a été symbolisé par la double flèche 33.

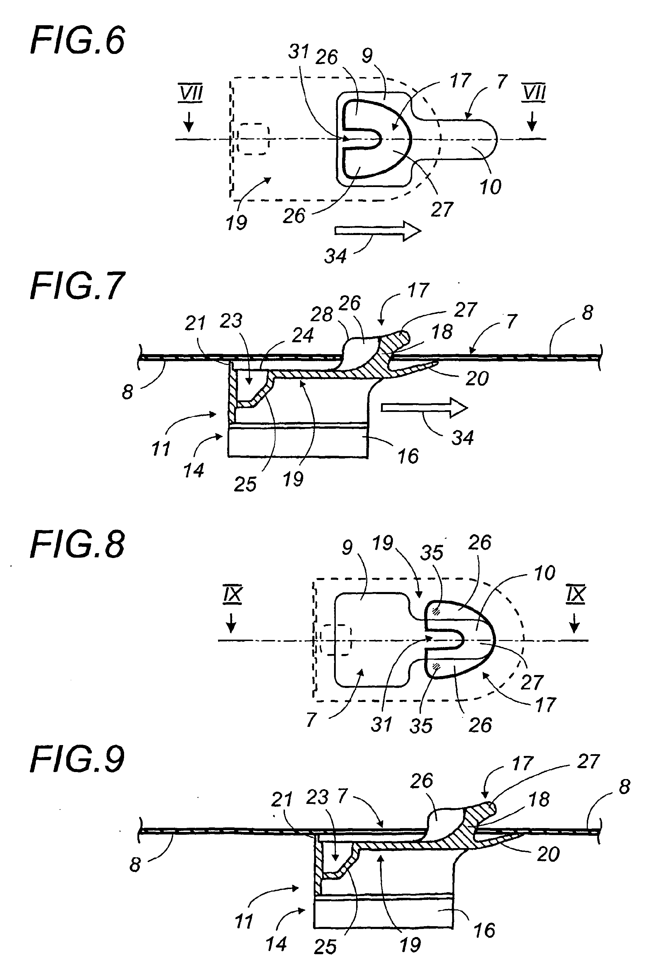

Le principe du montage du clip de fixation selon l'invention apparaît clairement sur les figures 6 à 9.

Lors de la première étape du montage de la baguette, illustrée par les figures 6 et 7, la tête de clip 17 est présentée devant la zone large 9 de l'ouverture en forme de trou de serrure 7 correspondante de la carrosserie 8 et insérée à travers celle-ci.

Avantageusement, la forme de la tête de clip 17 autorise celle-ci à être présentée avec un positionnement compris dans une gamme relativement importante d'emplacements convenables.

Au cours de la deuxième étape de montage, le monteur déplace la baguette par un mouvement de translation dans le sens des flèches 34 représentées sur les figures 6 et 7. Les clips de fixation 6 sont ainsi translatés vers la partie étroite 10 des trous de serrure 7 jusqu'à une position finale de blocage représentée sur les figures 8 et 9.

Pour permettre ce déplacement, l'âme centrale 18 du clip de fixation qui traverse l'ouverture, doit passer de la partie large 9 vers la partie étroite 10 de l'ouverture. Pour faciliter ce mouvement, la face avant de l'âme centrale 18 est préférentiellement de forme arrondie, ce qui permet un effet de centrage.

Lors de ce mouvement de translation, la face inférieure de la tête de clip 17 vient progressivement, par glissement le long des rampes inclinées d'engagement 29, en prise avec les bords de carrosserie 8 entourant la zone étroite de l'ouverture, ce qui assure le plaquage de la baguette 2 au niveau de ses rebords longitudinaux 5 contre la tôle.

Les rampes inclinées 29 permettent de faciliter l'engagement de la tête de clip derrière la carrosserie lors du glissement du clip vers l'avant au cours du montage.

Sur la figure 7, on a représenté un cas idéal où la tête de clip est déjà passée derrière la carrosserie. Cependant, la situation est souvent différente.

En effet, le monteur maintient habituellement la baguette 2 au milieu et au niveau de son extrémité arrière, sur laquelle il doit pousser pour réaliser le montage. Il arrive alors qu'à l'autre extrémité, la baguette ne soit pas complètement plaquée contre la carrosserie. Dans ce cas, les rampes 29 permettent d'engager progressivement la tête de clip 17 derrière les bords de l'ouverture 7.

Ces rampes 29 servent également à déterminer et à optimiser l'effort de montage, c'est-à-dire à le rendre progressif en fonction de la pente de ces rampes.

La forme à extrémité avant en pointe et à extrémité arrière élargie de la tête de clip 17, permet de réaliser un maintien au niveau de deux zones d'appui 35 situées sur la face inférieure des branches latérales 26 de la tête de clip. Ces zones d'appui 35, d'étendue suffisante pour assurer un bon maintien malgré l'évidement 31, sont symbolisées sur la figure 8 par deux cercles à surface hachurée.

En position finale de montage, elles portent en pleine tôle de part et d'autre de la partie étroite 10 de l'ouverture et donc loin des éventuelles bavures liées au poinçonnage de l'ouverture 7.

Selon une caractéristique particulièrement inventive de l'invention, le clip intégré comporte en outre une patte sécable de positionnement 36, dont la fonction est de s'opposer à la descente du clip de fixation lorsque celui-ci se trouve dans la partie large de l'ouverture après la première étape de montage en buttant contre la paroi inférieure 37 de cette ouverture.

Cette patte sécable de positionnement 36 se situe de préférence sous la tête de clip 17. Il s'agit par exemple d'une bande sensiblement rectangulaire, reliée à la sous-face de l'une des branches latérales 26 de la tête de clip au niveau de son extrémité supérieure et à la sellette d'étanchéité 19 au niveau de son extrémité inférieure. Dans le mode de réalisation représenté, le plan de cette patte sécable 36 est perpendiculaire à la direction du mouvement de montage du clip.

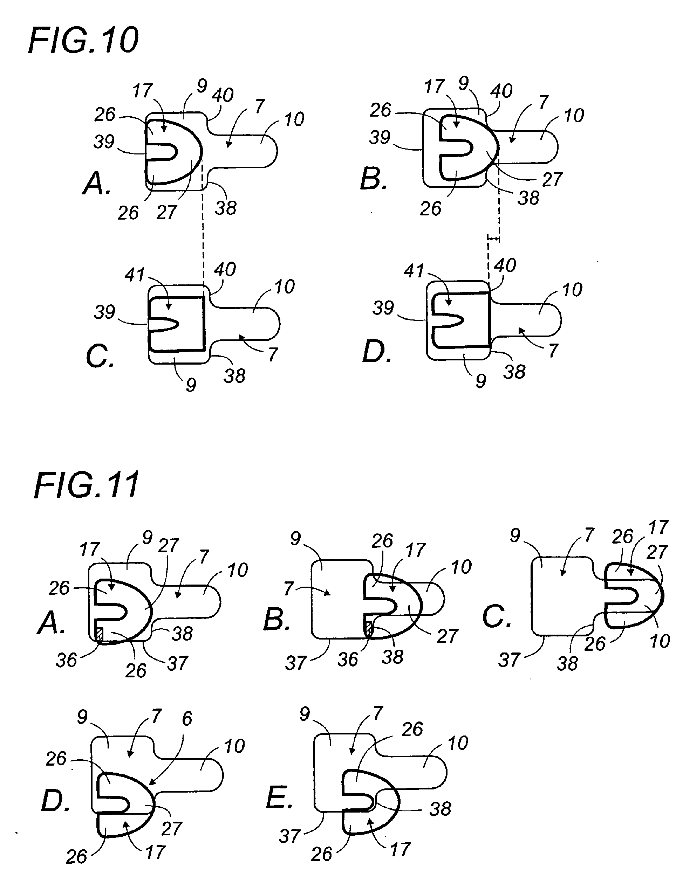

Le fonctionnement et les avantages de cette patte sécable de positionnement 36 sont représentés sur les vues schématiques des figures 11 A à E.

Sur les figures 11 D et E, on a représenté le mouvement d'un clip intégré de fixation, dépourvu de patte sécable.

Après la première étape de montage, la baguette est entraînée vers le bas par gravité et avec elle le clip de fixation 6. Le clip de fixation 6 se retrouve en appui au niveau de son âme centrale 18 contre la paroi inférieure 37 de la partie large 9 de l'ouverture 7, comme représenté sur la figure 11 D.

Comme on peut le voir sur la figure 11 E, le mouvement de translation nécessaire à la deuxième étape du montage est alors impossible, l'âme centrale 18 venant buter contre l'épaulement inférieur 38 reliant la partie large 9 à la partie étroite 10 de l'ouverture.

Sur les figures 11 A à C, une patte sécable de positionnement 36 a été prévue sous la tête de clip 17. Sur la figure 11 A, on peut voir que le clip de fixation 6 repose contre la paroi inférieure 37 de la partie large 9 de l'ouverture 7, non pas au niveau de son âme centrale comme précédemment, mais au niveau de cette patte de positionnement 36. Grâce à cette patte 36, le clip de fixation 6 est maintenu dans une position plus élevée dans laquelle son âme centrale se trouve en vis-à-vis de la partie étroite 10 de l'ouverture.

Lorsque le monteur amorce le mouvement de translation de la baguette, la patte sécable 36 se retrouve en appui contre l'épaulement inférieur 38 de l'ouverture, comme représenté sur la figure 11 B. Un effort limité suffit alors à rompre la patte sécable 36.

Le clip étant idéalement pré-positionné, le mouvement de translation peut se poursuivre sans difficulté jusqu'à la position finale de montage représentée sur la figure 11 C.

La tête de clip selon l'invention permet, grâce à son contour extérieur se développant en pointe à l'avant, un gain non négligeable de centrage mis en évidence sur les figures 10 A à D.

Les figures 10 A et B illustrent les deux positions limites de la gamme de positionnements de la tête de clip 17 convenables pour réaliser la première étape du montage de la baguette.

Dans la première de ces positions (figure 10 A), la tête de clip 17 selon l'invention est en butée arrière contre la paroi arrière 39 de la partie large 9 de l'ouverture 7, au niveau de son extrémité arrière ici par exemple l'extrémité arrière 28 de ses ailes latérales 26.

Dans la deuxième position (figure 10 B), la tête de clip 17 est en butée latérale contre les épaulements supérieur 40 et inférieur 38 de l'ouverture, la partie avant en pointe, notamment ici la partie centrale incurvée 27, de la tête de clip 17 étant déjà partiellement engagée dans la zone étroite 10 de l'ouverture.

Toutes les positions intermédiaires entre ces deux positions conviennent pour l'insertion de la tête de clip et composent la gamme de positionnements convenables précédemment mentionnée.

Par comparaison, les figures 10 C et D illustrent les mêmes positions limites pour une tête de clip 41, de même taille, selon l'art antérieur décrit dans la partie introductive de la présente demande, c'est-à-dire une tête de clip de forme générale rectangulaire.

Si la première position limite (figure 10 C) est quasi-identique, la deuxième (figure 10 D) est nettement en retrait par rapport à celle de la tête de clip selon l'invention (figure 10 B). En effet, de par sa forme rectangulaire, la tête de clip 41 selon l'art antérieur arrive bien plus tôt en butée avant contre les épaulements supérieur 40 et inférieur 38 de l'ouverture. La gamme de positionnements convenables obtenue est donc plus restreinte.

Il doit être bien compris que l'invention ne se limite pas aux clips de fixation et baguettes tels que décrits ci-dessus et représentés sur les figures. Elle s'étend également à toutes les variantes imaginables par l'homme du métier comprises dans la portée des revendications.

Ainsi, on peut par exemple envisager de nombreuses applications, différentes de l'application préférentielle représentée et précédemment décrite, pour le clip de fixation selon l'invention.

Le clip de fixation selon l'invention n'est évidemment pas limité aux baguettes de ceinture de caisse. Il peut être utilisé pour tout autre élément destiné à être rapporté sur la carrosserie ou une autre paroi d'un véhicule routier.

On peut par exemple citer des accessoires de carrosserie extérieure, tels que des protections inférieures de portières, des badges, logos ou emblèmes décoratifs ou de signalisation, ou tout autre accessoire approprié. On peut également l'utiliser pour réaliser la fixation d'accessoires de carrosserie intérieure, notamment de pièces d'habillage intérieur, ou même d'autres pièces ou accessoires intérieurs de véhicules comme par exemple des éléments de tableau de bord ou autres.

## Revendications

1. Clip intégré de fixation réalisé en une seule pièce, destiné à une baguette (2) de protection ou d'enjolivement ou à un autre élément à rapporter sur la carrosserie ou autre partie d'un véhicule routier notamment automobile, conçu pour coopérer avec une ouverture correspondante (7) dite en « trou de serrure » formée d'une partie large (9) prolongée par une partie étroite (10) et située en regard dans la carrosserie (8) du véhicule, le clip intégré (6) comportant une tête de clip (17) reliée au reste du clip par une âme centrale (18) plus étroite servant d'axe au clip de fixation, **caractérisé en ce que** la tête de clip (17) présente un contour périmétrique à extrémité avant à pointe arrondie (27), formé de deux bords (26) convergeant vers l'avant et divergeant ou s'évasant vers une extrémité arrière ouverte ou fermée.

2. Clip intégré selon la revendication 1 **caractérisé en ce que** la tête de clip (17) présente un contour périmétrique à extrémité avant (27) à pointe arrondie en forme d'ogive.

3. Clip intégré selon la revendication précédente **caractérisé en ce que** la tête de clip (17) présente un corps de forme générale en « U couché », comportant deux branches latérales (26) réunies à l'avant par une portion centrale incurvée (27).

4. Clip intégré selon l'une quelconque des revendications précédentes **caractérisé en ce que** le plan de la tête de clip (17) est incliné, l'extrémité avant à pointe (27) étant surélevée par rapport à l'extrémité arrière.

5. Clip intégré selon l'une quelconque des revendications précédentes **caractérisé en ce que** la tête de clip (17) présente un chant extérieur (30) bombé ou arrondi.

6. Clip intégré selon l'une quelconque des revendications 3 à 5 **caractérisé en ce que** l'une au moins des branches latérales (26) présente une extrémité arrière (28) réalisée en quart de sphère.

7. Clip intégré selon l'une quelconque des revendications précédentes **caractérisé en ce que** l'extrémité avant de la tête de clip (17) est dégagée et s'étend en porte-à-faux à partir de l'âme centrale (18).

8. Clip intégré selon l'une quelconque des revendications précédentes **caractérisé en ce que** la face inférieure de la tête de clip (17) comporte une rampe progressive d'engagement (29).

9. Clip intégré selon l'une quelconque des revendications précédentes **caractérisée en ce que** la tête de clip (17) comporte un évidement (31) permettant un refroidissement plus rapide.

10. Clip intégré selon l'une quelconque des revendications précédentes **caractérisé en ce qu'**il comporte une patte sécable de positionnement (36) permettant de s'opposer à la descente du clip de fixation (6) en buttant contre la paroi inférieure de l'ouverture (7).

11. Clip intégré de fixation selon l'une quelconque des revendications précédentes **caractérisé en ce qu'**il comporte en outre une base (11).

12. Clip intégré de fixation selon la revendication précédente **caractérisé en ce que** la base (11) est une structure en caisson, à base sensiblement rectangulaire, qui délimite un espace creux (13) ouvert sur l'une de ses faces.

13. Clip intégré de fixation selon la revendication 11 ou 12 **caractérisé en ce que** la base (11) comprend deux parois latérales (14) qui s'élèvent de manière inclinée et convergente.

14. Clip intégré de fixation selon l'une quelconque des revendications précédentes **caractérisé en ce qu'**il comporte en outre une sellette d'étanchéité (19).

15. Clip intégré de fixation selon les revendications 11 et 14 **caractérisé en ce que** la paroi supérieure de la base (11) constitue directement la sellette d'étanchéité (19) du clip de fixation.

16. Clip intégré de fixation selon la revendication 14 ou 15 **caractérisé en ce que** la sellette d'étanchéité (19) présente un bord périphérique (20) relevé de façon inclinée vers le haut en direction de la carrosserie.

17. Clip intégré de fixation (6) selon l'une quelconque des revendications 14 à 16 **caractérisé en ce que** la sellette d'étanchéité (19) comporte un rebord fendu (21), sensiblement vertical et perpendiculaire au plan de la sellette, s'élevant en direction de la carrosserie.

18. Clip intégré de fixation (6) selon l'une quelconque des revendications 14 à 17 **caractérisé en ce que** la sellette d'étanchéité (19) présente une cavité (23) occupée lors des opérations de moulage et de démoulage par l'extrémité d'une tige de maintien.

19. Clip intégré de fixation (6) selon la revendication précédente **caractérisé en ce que** la cavité (23) comporte une ouverture (24) dirigée vers le haut et une paroi de fond inclinée (25).

20. Clip intégré de fixation (6) selon l'une quelconque des revendications 14 à 19 **caractérisé en ce que** l'extrémité avant de la sellette d'étanchéité (19) est dégagée et s'étend en porte-à-faux vers l'avant.

21. Baguette (2) de protection ou d'enjolivement pour carrosserie de véhicules routiers notamment du type automobile, comportant sur sa face arrière (3) au moins un clip intégré de fixation (6) destiné à coopérer avec une ouverture (7) correspondante dite en « trou de serrure » formée d'une partie large (9) prolongée par une partie étroite (10) et située en regard dans la carrosserie (8) du véhicule, **caractérisée en ce que** cet au moins un clip intégré de fixation (6) est conforme à l'une quelconque des revendications précédentes.

## Claims

1. Integrated mounting clip formed as a single piece, intended for a rod (2) for protection or embellishment or another element to be added onto the bodywork or another part of a road vehicle, in particular a car, designed to cooperate with a corresponding opening (7) called a « keyhole » made up of a large part (9) extended by a narrow part (10) and situated opposite on the bodywork (8) of the vehicle, the integrated clip (6) including a clip head (17) connected to the rest of the clip by a narrower central core (18) thus serving as axis to the mounting clip, **characterised in that** the clip head (17) presents a peripheral profile with the front end having a rounded tip (27), made up of two edges (26) converging towards the front and diverging or broadening towards an opened or closed rear end.

2. Integrated clip according to claim 1 **characterised in that** the clip head (17) presents a peripheral profile with the front end (27) having a rounded tip in an ogive form.

3. Integrated clip according to the previous claim **characterised in that** the clip head (17) presents a body with a general « recumbent U » shape, including two lateral branches (26) joined at the front by a curved central part (27).

4. Integrated clip according to any of the previous claims **characterised in that** the surface of the clip head (17) is inclined, the front end having a pointed tip (27) being elevated with respect to the rear end.

5. Integrated clip according to any of the previous claims **characterised in that** the clip head (17) presents a domed or rounded external edge (30).

6. Integrated clip according to any of the claims 3 to 5 **characterised in that** at least one of the lateral branches (26) presents a rear end (28) made in the form of the quarter of a sphere.

7. Integrated clip according to any of the previous claims **characterised in that** the front end of the clip head (17) is released and extends by overhanging from the central core (18).

8. Integrated clip according to any of the previous claims **characterised in that** the lower face of the clip head (17) includes a progressive engagement incline (29).

9. Integrated clip according to any of the previous claims **characterised in that** the clip head (17) includes a hollow (31) allowing a faster cooling.

10. Integrated clip according to any of the previous claims **characterised in that** it includes a divisible positioning leg (36) allowing the descent of the attachment clip (6) to be opposed by abutting against the lower wall of the opening (7).

11. Integrated mounting clip according to any of the previous claims **characterised in that** it also includes a base (11).

12. Integrated mounting clip according to the previous claim **characterised in that** the base (11) is a box-shaped structure, with a slightly rectangular base, which delimits a hollow space (13) opened on one of its faces.

13. Integrated mounting clip according to claim 11 or 12 **characterised in that** the base (11) includes two lateral walls (14) that rise in a convergent and inclined way.

14. Integrated mounting clip according to any of the previous claims **characterised in that** it also includes a sealing mounting plate (19).

15. Integrated mounting clip according to claims 11 and 14 **characterised in that** the upper wall of the base (11) directly constitutes the sealing mounting plate (19) of the mounting clip.

16. Integrated mounting clip according to the claim 14 or 15 **characterised in that** the sealing mounting plate (19) presents a peripheral edge (20) raised upwards in an inclined way in the direction of the bodywork.

17. Integrated mounting clip (6) according to any of the claims 14 to 16 **characterised in that** the sealing mounting plate (19) includes a split ledge (21), slightly vertical and perpendicular to the surface of the mounting plate, rising in the direction of the bodywork.

18. Integrated mounting clip (6) according to any of the claims 14 to 17 **characterised in that** the sealing mounting plate (19) presents a cavity (23) taken up during the moulding and removal operations by the end of a support shank.

19. Integrated mounting clip (6) according to the previous claim **characterised in that** the cavity (23) includes an opening (24) directed upwards and an inclined base wall (25).

20. Integrated mounting clip (6) according to any of the claims 14 to 19 **characterised in that** the front end of the sealing mounting base (19) is released and extends upwards by overhanging towards the front.

21. Rod (2) for protection or embellishment for the bodywork of road vehicles, in particular of the automobile type, including on its rear face (3) at least one integrated mounting clip (6) intended to cooperate with a corresponding opening (7) called a « keyhole » made up of a large part (9) extended by a narrow part (10) and situated opposite on the bodywork (8) of the vehicle, **characterised in that** at least one integrated mounting clip (6) is in accordance with any of the previous claims.

## Patentansprüche

1. Integrierte Befestigungsklammer, die einstückig ausgebildet und für eine Schutz- oder Zierleiste (2) oder ein anderes, an der Karosserie oder einem anderen Teil eines Straßenfahrzeugs, insbesondere eines Kraftfahrzeugs, zu montierendes Element vorgesehen und dazu ausgelegt ist, mit einer entsprechenden, als "Schlüsselloch" bezeichneten Öffnung (7) zusammenzuwirken, die durch einen breiten Teil (9) gebildet ist, welcher durch einen schmalen Teil (10) verlängert ist, und die gegenüber in der Karosserie (8) des Fahrzeugs angeordnet ist, wobei die integrierte Klammer (6) einen Klammerkopf (13) umfasst, der mit dem Rest der Klammer über einen schmaleren Mittelsteg (18) verbunden ist, der als Achse für die Befestigungsklammer dient, **dadurch gekennzeichnet, dass** der Klammerkopf (17) eine Umfangskontur mit einem Vorderende mit abgerundeter Spitze (27) aufweist, die durch zwei Ränder (26) gebildet ist, welche nach vorne hin zusammenlaufen und zu einem hinteren, offenen oder geschlossenen Ende hin auseinanderlaufen oder sich ausbauchen.

2. Integrierte Klammer nach Anspruch 1, **dadurch gekennzeichnet, dass** der Klammerkopf (17) eine Umfangskontur mit einem Vorderende (27) mit abgerundeter Spitze in Spitzbogenform aufweist.

3. Integrierte Klammer nach dem vorhergehenden Anspruch, **dadurch gekennzeichnet, dass** der Klammerkopf (17) einen Körper mit der allgemeinen Form eines "liegenden U", mit zwei seitlichen Schenkeln (26), die vorne über einen gebogenen Mittelabschnitt (27) miteinander verbunden sind, aufweist.

4. Integrierte Klammer nach einem der vorhergehenden Ansprüche, **dadurch gekennzeichnet, dass** die Ebene des Klammerkopfes (17) geneigt ist, wobei das Vorderende (27) mit der Spitze gegenüber dem hinteren Ende überhöht ist.

5. Integrierte Klammer nach einem der vorhergehenden Ansprüche, **dadurch gekennzeichnet, dass** der Klammerkopf (17) eine gewölbte oder abgerundete Außenkante (30) aufweist.

6. Integrierte Klammer nach einem der vorhergehenden Ansprüche 3 bis 5, **dadurch gekennzeichnet, dass** mindestens einer der seitlichen Schenkel (26) ein hinteres Ende (28) aufweist, das als Viertelkugel ausgebildet ist.

7. Integrierte Klammer nach einem der vorhergehenden Ansprüche, **dadurch gekennzeichnet, dass** das vordere Ende des Klammerkopfes (17) frei ist und als Auskragung vom Mittelsteg (18) vorsteht.

8. Integrierte Klammer nach einem der vorhergehenden Ansprüche, **dadurch gekennzeichnet, dass** die Unterseite des Klammerkopfes (17) eine progressive Eingriffsrampe (29) umfasst.

9. Integrierte Klammer nach einem der vorhergehenden Ansprüche, **dadurch gekennzeichnet, dass** der Klammerkopf (17) eine Aussparung (31) aufweist, die eine raschere Abkühlung ermöglicht.

10. Integrierte Klammer nach einem der vorhergehenden Ansprüche, **dadurch gekennzeichnet, dass** sie eine teilbare Positionierlasche (36) umfasst, die es ermöglicht, der Abwärtsbewegung der Befestigungsklammer (6) durch Anstoßen an der unteren Wand der öffnung (7) entgegenzuwirken.

11. Integrierte Befestigungsklammer nach einem der vorhergehenden Ansprüche, **dadurch gekennzeichnet, dass** sie ferner eine Basis (11) umfasst.

12. Integrierte Befestigungsklammer nach dem vorhergehenden Anspruch, **dadurch gekennzeichnet, dass** die Basis (11) eine Kastenstruktur mit im wesentlichen rechteckiger Basis ist, die einen Hohlraum (13) begrenzt, der an einer seiner Seiten offen ist.

13. Integrierte Befestigungsklammer nach Anspruch 11 oder 12, **dadurch gekennzeichnet, dass** die Basis (11) zwei Seitenwände (14) umfasst, die sich in geneigter und konvergierender Weise erheben.

14. Integrierte Befestigungsklammer nach einem der vorhergehenden Ansprüche, **dadurch gekennzeichnet, dass** sie ferner eine sattelförmige Dichtungsschale (19) umfasst.

15. Integrierte Befestigungsklammer nach den Ansprüchen 11 und 14, **dadurch gekennzeichnet, dass** die obere Wand der Basis (11) unmittelbar die sattelförmige Dichtungsschale (19) der Befestigungsklammer bildet.

16. Integrierte Befestigungsklammer nach Anspruch 14 oder 15, **dadurch gekennzeichnet, dass** die sattelförmige Dichtungsschale (19) einen Umfangsrand (20) aufweist, der so angehoben ist, dass er nach oben in Richtung der Karosserie ansteigt.

17. Integrierte Befestigungsklammer (6) nach einem der Ansprüche 14 bis 16, **dadurch gekennzeichnet, dass** die sattelförmige Dichtungsschale (19) eine geschlitzte Randleiste (21) umfasst, die im wesentlichen vertikal und senkrecht zur Ebene des Sattels verläuft und in Richtung der Karosserie ansteigt.

18. Integrierte Befestigungsklammer (6) nach einem der Ansprüche 14 bis 17, **dadurch gekennzeichnet, dass** die sattelförmige Dichtungsschale (19) einen Hohlraum (23) aufweist, der bei den Vorgängen des Formens und des Entformens vom Ende eines Halteschaftes eingenommen wird.

19. Integrierte Befestigungsklammer (6) nach dem vorhergehenden Anspruch, **dadurch gekennzeichnet, dass** der Hohlraum (23) eine nach oben gerichtete Öffnung (24) und eine geneigte Bodenwand (25) umfasst.

20. Integrierte Befestigungsklammer (6) nach einem der Ansprüche 14 bis 19, **dadurch gekennzeichnet, dass** das vordere Ende der sattelförmigen Dichtungsschale (19) frei ist und als Auskragung vorsteht.

21. Schutz- oder Zierleiste (2) für die Karosserie von Straßenfahrzeugen, insbesondere für Kraftfahrzeuge, die auf ihrer Rückseite (3) mindestens eine integrierte Befestigungsklammer (6) umfasst, welche mit einer entsprechenden, als "Schlüsselloch" bezeichneten Öffnung (7) zusammenwirken soll, die aus einem breiten Teil (9) gebildet ist, welcher durch einen schmalen Teil (10) verlängert ist, und die gegenüber in der Karosserie (8) des Fahrzeugs liegt, **dadurch gekennzeichnet, dass** diese mindestens eine Befestigungsklammer (6) gemäß einem der vorhergehenden Ansprüche ausgebildet ist.
